(19) Europäisches Patentamt
European Patent Office
Office européen des brevets

(11) **EP 3 533 905 A1**

(12) **EUROPEAN PATENT APPLICATION**

(43) Date of publication:
04.09.2019 Bulletin 2019/36

(51) Int Cl.:
*C25B 15/00* (2006.01)   *C25B 1/04* (2006.01)

(21) Application number: 18159458.1

(22) Date of filing: 01.03.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: **Shell Internationale Research
Maatschappij B.V.**
**2596 HR The Hague (NL)**

(72) Inventor: **The designation of the inventor has not
yet been filed**

(74) Representative: **Shell Legal Services IP**
**PO Box 384**
**2501 CJ The Hague (NL)**

(54) **METHOD OF CONFIGURING A WATER ELECTROLYSIS SYSTEM**

(57)   A method of configuring a water electrolysis system having at least two components, wherein the first component is directly connected to the second component, the method comprising the steps of: providing a predetermined first performance curve of the first component; providing a first degradation rate of the first component; calculating an anticipated first performance curve of the first component for a specific timeline by modifying the predetermined first performance curve based on the first degradation rate; providing a predetermined second performance curve of the second component; and configuring the second component by matching the second performance curve with the anticipated first performance curve of the first component.

Fig.5

**Description**

FIELD OF THE INVENTION

The present invention is directed to a method of configuring a water electrolysis system. The electrolysis system typically has a photovoltaic array for providing current and voltage output, and an electrolyser arrangement having at least one electrolyser stack (directly) connected to the photovoltaic array.

BACKGROUND TO THE INVENTION

Hydrogen is a molecule of key interest for the future energy transition, either as a commercial fuel for automotive fuel cell applications, or as a carrier to move renewable energy over long distances. The viability of hydrogen manufactured from renewable power sources will depend on whether it can ever compete on a cost basis with hydrogen from fossil fuels via steam-methane reforming. Electrolysis is a promising option for hydrogen production from renewable power sources. Electrolysis is a process using electricity to split water into hydrogen and oxygen. This reaction typically takes place in a unit called an electrolyser.

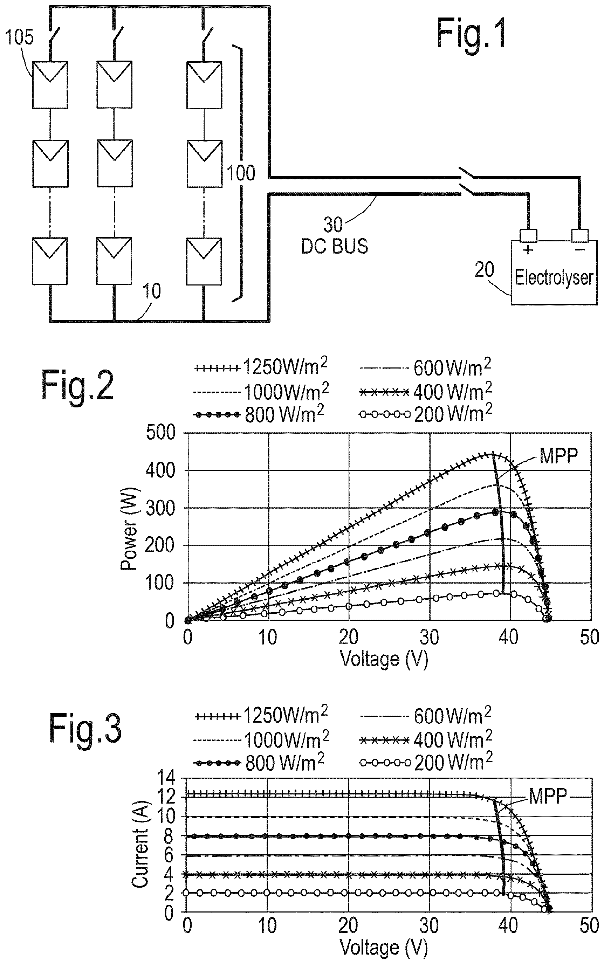

The conventional line-up for a solar photovoltaic to electrolyser system would be with an alternating current (AC) electrical system. The photovoltaic power would be converted to AC and stepped up to a higher voltage for transfer to another part of the plant where the voltage is stepped down and the AC power is rectified to supply to the electrolyser(s). As solar photovoltaic and water electrolysers are both direct current (DC) electrical systems, a possible route to reduce system costs is the coupling of these devices such that the AC conversion is obviated (DC-DC conversion). In a more extreme case a system can be imagined wherein the power electronics are almost completely removed, this is the concept of direct coupling as shown in figure 1.

A directly coupled system as shown in Figure 1 typically comprises a photovoltaic array 10 which is directly connected to an electrolyser arrangement 20 having at least one electrolyser stack via a DC bus 30. The photovoltaic array 10 may comprise a group of photovoltaic modules 105. The group of photovoltaic modules 105 are typically connected in series to form a string 100. The photovoltaic array 10 may comprise multiple strings 100 connected in parallel.

In a directly coupled system as described in figure 1, the system is configured by matching a predefined performance curve of the photovoltaic array 10 with a predefined performance curve of the electrolyser arrangement 20. The system configuration includes deciding the configuration of the photovoltaic array for a specific configuration of an electrolyser arrangement or deciding the configuration of the electrolyser arrangement for a specific configuration of a photovoltaic array. Photovoltaic (PV) module vendors usually provide technical data including performance curves: P-V and I-V curves for the modules. A P-V curve describes the power-voltage correlation at different solar irradiance levels and an I-V curve describes the current-voltage correlation at different solar irradiance levels for a certain type of photovoltaic module. The performance curves (See I-V curves as shown in figure 2 and P-V curves as shown in figure 3) of a photovoltaic array can be calculated by multiplying the voltage provided by a single module by the number of panels in the string. The total photovoltaic array current is determined by choosing the total number of parallel strings and multiplying. These one or more performance curves calculated for the photovoltaic array are referred to as the one or more predetermined performance curves of the photovoltaic array.

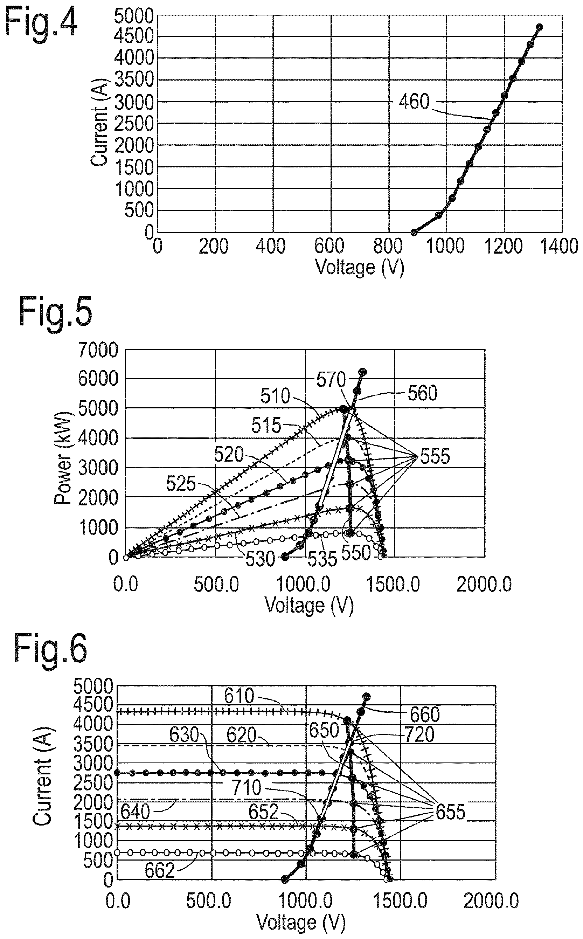

An electrolyser vendor may provide data for an electrolyser cell or stack and these data can be used for deriving polarization curves for the cell or stack. A polarization curve (I-V) of an electrolyser cell or stack is the relationship between cell/stack potential (V) and applied current density (I) and is the most basic and characteristic representation of the performance of a single cell or electrolyser stack. Once a polarization curve is derived for an electrolyser stack or cell, a power-voltage (P-V) relation can be further derived from the polarization curve data. The two curves (i.e. P-V curve and I-V curve) derived for the electrolyser arrangement are referred to as predetermined performance curves of the electrolyser arrangement. Figure 4 represents an example of a predetermined performance curve 460 of an electrolyser arrangement.

Patent application WO07142693A2 in the name of General Motors describes an array of photovoltaic (PV) module(s) arranged in series and/or in parallel to deliver direct current electrical power to an electrolyser to produce hydrogen. The electric power is delivered by the array at its maximum power point (Vmpp) to deliver Ioper at Voper for the electrolyser.

Another patent application US2005189234 in the name of General Motor discloses a method for configuring a solar hydrogen generation system. A method for optimizing the system is disclosed. The method claims optimization of the water electrolysis system by matching the most efficient voltage generated by photovoltaic cells to the most efficient input voltage required by the electrolysis cell(s).

Patent application CN101565832A relates to a water electrolysis hydrogen production system.

The above described references in direct coupling use a control system for continuously monitoring system performance for optimizing the system. This may add additional cost for hydrogen production and may not be suitable for larger systems involving higher megawatt ranges. Also, the references described above do not address performance degradation of the system components due to aging. In a direct coupling scenario, the system components are configured by directly matching the performance curve of both the components. The performance curves are optimal, and do not consider performance degradation of the respective components with aging. Because of degradation of performance of the system components, performance curves defined at the start of life of a photovoltaic array or an electrolyser arrangement will over time mis-represent the actual performance of a photovoltaic array or an electrolyser arrangement throughout the life of the system. If the components are configured by matching the performance curves without considering degradation factors, this may result in decreasing hydrogen production efficiency of the system over time. This also increases the chance of safety issues of a plant since the electrolyser stack may receive too much power.

SUMMARY OF THE INVENTION

It is an aim to obviate one or more of the disadvantages of conventional PV-electrolyser systems as described above.

In an embodiment, the present disclosure provides a method of configuration of a water electrolysis system having at least two components, wherein the first component is directly connected to the second component, the method comprising the steps of providing a predetermined performance curve of the first component; providing a degradation rate of the first component; calculating an anticipated performance curve of the first component for a specific timeline by modifying the predetermined performance curve of the first component based on the degradation rate of the first component; optimizing the configuration of the second component to match its performance curve with the anticipated performance curve of the first component.

In another embodiment, the disclosure provides a method of configuring the water electrolysis system comprising the steps of: providing a predetermined first performance curve of the first component and a predetermined second performance curve of the second component; providing a first degradation rate of the first component and a second degradation rate of the second component; calculating an anticipated first performance curve of the first component and an anticipated second performance curve of the second component for a specific timeline by modifying the predetermined first performance curve and the second performance curve based on the first degradation rate and the second degradation rate respectively; optimizing the configuration of the first component and the second component by matching the anticipated first performance curve with the anticipated second performance curve.

In one embodiment of the invention, the first component is a photovoltaic array and the second component is an electrolyser arrangement having at least one electrolyser stack and in another embodiment, the first component is an electrolyser arrangement having at least one electrolyser stack and the second component is a photovoltaic array.

BRIEF DESCRIPTION OF THE DRAWINGS

The drawing figures depict one or more implementations in accordance with the present disclosure, by way of example only, not by way of limitation. In the figures, like reference numerals refer to the same or similar elements. In the drawing:

Figure 1 is an example of a conventional directly coupled photovoltaic-electrolyser arrangement;
Figure 2 is a diagram showing examples of I-V curves of a conventional photovoltaic array;
Figure 3 is an example of a P-V curve of the photovoltaic array;
Figure 4 is an example of a characteristic curve of the electrolyser arrangement;
Figure 5 shows an exemplary diagram indicating matching the P-V curve of the photovoltaic array with the characteristic curve of the electrolyser arrangement in accordance with an embodiment of the invention;
Figure 6 is a diagram showing an example of matching of the I-V curve of the photovoltaic array with the characteristic curve of the eletrolyser arrangement in accordance with an embodiment of the invention;
Figure 7 is a diagram showing an example of drift in the electrolyser performance curve with aging according to an embodiment of the invention; and
Figure 8 is a diagram showing an example of drift in the photovoltaic performance curve with aging according to an embodiment of the invention.

DETAILED DESCRIPTION OF THE INVENTION

The present disclosure provides a method of configuring g a water electrolysis system having at least two components. One of the component is typically a photovoltaic array 10 for providing current and voltage output and the other component is typically an electrolyser arrangement 20 having at least one electrolyser stack directly connected to the photovoltaic array. See Figure 1. The method of optimizing the water electrolysis system according to the present disclosure takes into account the performance degradation of at least one of the components, typically one or both photovoltaic array or the electrolyser arrangement, for matching the performance curves.

In one embodiment of the invention, aging of the photovoltaic array has been considered for configuring the electrolyser system components. Photovoltaic ageing manifests as a reduction in current output with time. Lower current at the same voltage results in lower hydrogen production. Power curves provided by the manufacturer will be applicable only from the start of life performance of a photovoltaic array. Typically, photovoltaic vendors will quote degradation figures expressed as a percentage loss of power output for a period (may be in years) and based on this data an annual degradation rate of the photovoltaic array can be derived. By using this annual degradation rate of power, an anticipated performance curve of the photovoltaic array can be calculated for any timeline starting from the start of life of the array.

In one embodiment, the anticipated performance curve is calculated by considering the end of life performance of the photovoltaic array. In another embodiment, the anticipated performance curve is calculated by considering the midlife performance of the photovoltaic array.

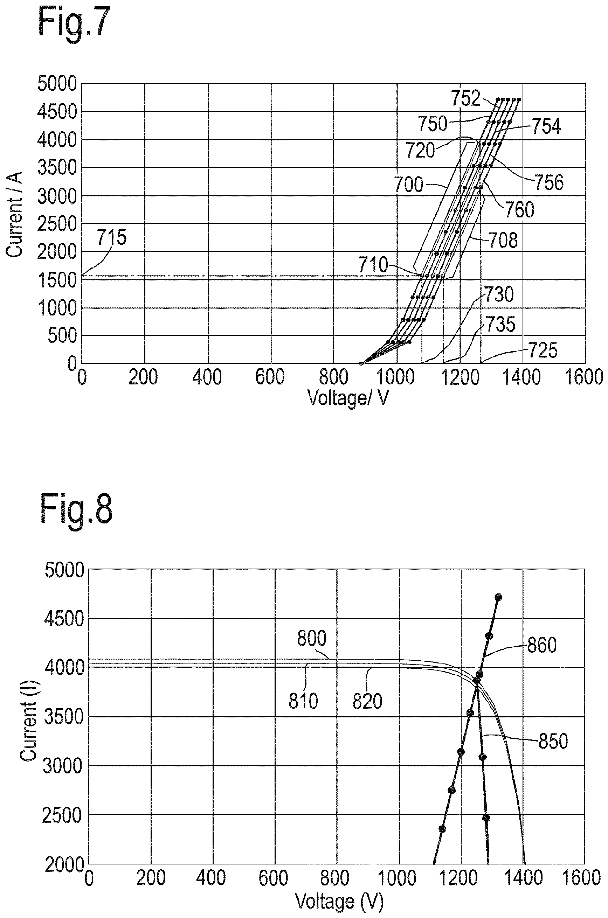

Figure 8 shows an example of an aging trend of the photovoltaic array with an exemplary degradation rate of "D" defined in power degradation percentage per year since first use of the electrolyser arrangement plotted for a period of 0 to N years of age of the photovoltaic array. First performance curve 800 represents the start of age performance curve of the photovoltaic array at a particular solar irradiance that may be selected based on the maximum irradiance at a particular location where the electrolyser system is planned to be installed. First and second anticipated performance curve 810, 820 represent an example of a deteriorating performance curve of the photovoltaic array at different, progressing times.

For calculating the anticipated performance curves 810, 820 of the photovoltaic array, current values (I) may be modified by subtracting the anticipated degradation at a specific timeline from the predetermined performance curve 800.

If "N" is the age of the photovoltaic array in years at a specific timeline and "D" is the annual power degradation rate in percentage per Year, then the anticipated current values ($I^N$) at a specific timeline (specific age N) may be calculated by using the formula:

$$I^N = I - (I * N * D / 100) \qquad (1)$$

wherein I is the current value at a specific voltage as per the predetermined performance curve 800 of the photovoltaic array as shown in figure 8. It indicates the start of life performance of the photovoltaic array.

In one embodiment of the invention, the annual degradation rate D is calculated based on the manufacturer supplied data.

If a manufacturer quotes a degradation of R percentage loss of power output in $N_{max}$ years, then D may be calculated by using a relation:

$$D = R / N_{max} \qquad (2)$$

For calculating the anticipated performance of P-V curves, power values (P) may be modified by subtracting the anticipated degradation at a specific timeline. If "N" is the age of the photovoltaic array in years at a specific timeline and "D" is the annual power degradation rate in percentage per Year, then the anticipated current values ($P^N$) at a specific timeline (specific age N) may be calculated by using the formula:

$$P^N = P - (P * N * D / 100) \qquad (3)$$

wherein P is the power value at a specific voltage as per the conventional P-V curve of the photovoltaic array as shown in figure 2 and it indicates the start of life performance of the photovoltaic array.

In one embodiment of the invention, the annual degradation rate D is calculated based on the manufacturer supplied data.

If a manufacturer quotes a degradation of R percentage loss of power output in $N_{max}$ years, then D may be calculated by using the relation:

$$D = R / N_{max.} \qquad (4)$$

In one embodiment of the invention, aging of the electrolyser arrangement has been considered for configuring the electrolyser system components.

Figure 7 shows an example of an aging trend of an electrolyser arrangement with an exemplary degradation rate of "d" defined in voltage per operation hours of the electrolyser arrangement plotted for a period of 0 to $T_n$ hours of operation of the electrolyser arrangement. Contraction of operating window 700 with time is also shown there. The characteristic curve 750 of the electrolyser arrangement at the start of operation (0 hours) of the electrolyser arrangement is shown. The anticipated performance curves 752, 754, 756, 760 indicate the performance curve of the electrolyser arrangement at progressing times ($T_n$ operation hours). The curves 752, 754, 756 represent the anticipatory performance curve of the electrolyser arrangement at timelines between 0 hours of operation and $T_n$ hours of operation of the electrolyser arrangement. Operating window 700, i.e. a subsection of the performance curve 750, represents the operating window of the electrolyser arrangement at the starting stage (0 hours). Portion 708 of the anticipated performance curve 760 represents the operating window of the electrolyser arrangement at $T_n$ operation hours.

The anticipated performance curves 752 to 760 of the electrolyser arrangement may be calculated by increasing the voltage values at specific currents based on the degradation rate of the electrolyser arrangement. For calculating the anticipated performance of the electrolyser arrangement, voltage values (V) may be modified by increasing the anticipated degradation of performance at a specific timeline.

Herein, "$T_n$" may indicate the operation hours of the electrolyser arrangement at a specific timeline and "d" is the degradation rate of the electrolyser arrangement expressed as voltage per operation hour. Then the anticipated voltage values ($V^n$) at a specific timeline ($T_n$ operation hours) may be calculated using the formula:

$$V^n = V + (V * T_n * d) \qquad (5)$$

wherein V is the voltage value at a specific current as per the start of life performance curve 460 of the electrolyser arrangement as described in figure 4. This indicates the start of life performance of the electrolyser arrangement.

Lower operating point 710 of the electrolyser arrangement is defined by minimum operating current 715 of the electrolyser arrangement. Cut-in power requirement increases with aging as indicated by the higher voltage 735 at the same operating current 715 at $T_n$ operating hours of the electrolyser arrangement.

Maximum operating point 720 of the electrolyser arrangement may be defined by the maximum operating voltage 725 to protect the stack. Therefore the maximum power decreases with aging as indicated by the maximum operating voltage 725 at $T_n$ operating hours of the electrolyser arrangement. The lower operating point 710 and maximum operating point 720 define the operating window 700 of the electrolyser arrangement. With time, said operating window decreases, from operating window 700 at start of life down to operating window 708 of curve 760 (Fig. 7).

Aging of the electrolyser manifests in a drift of the operating line 750 (stack polarization curve) towards higher potentials. This means an overall contraction in the operating window as indicated by the curve portion 708 which has got a reduced operating window 708 compared to the initial operating window 700 at start of operation.

The result of reduced operating window and lower currents has a relatively complex relationship with power utilization and hydrogen production potential, and depends on the matching strategy employed. Actual power utilization level and hydrogen production potential are maximized by opting for lower voltage arrays and maximizing current. When consider aging, if the maximum current of the electrolyser arrangement reduces faster than the maximum photovoltaic array current, there could be issues. For instance, the electrolyser stack may receive too much power, if the electrolyser system components were matched on start of life performance. It is important to note, therefore, that the systems may need to be matched based on anticipated end of life performance.

A first approximation of electrolyser aging can be defined by gradual increases in cell resistances; ionic and electrical ohmic resistance and activation overpotentials. This can be quantified by a steady (averaged) degradation rate, applied to the linear portion of the electrolyser polarization curve. For example, a degradation rate of about 7 $\mu$V/ hour can be assumed. In one embodiment, the anticipated performance curve is calculated considering the end of life performance of the electrolyser arrangement and in another embodiment, the anticipated performance curve is calculated considering the midlife performance of the electrolyser arrangement.

In an embodiment of the invention, aging of both the electrolyser arrangement and the photovoltaic array is considered for matching the performance curves. When aging of both the photovoltaic array and electrolyser arrangement are considered together, the total available power from the photovoltaic array decreases and the total amount of power used in the direct coupling case may be quite stable. The efficiency of power utilization when compared to the conventional case may increase. Similarly, the hydrogen production decreases as the system ages, but the relative amount of hydrogen production in the direct coupled solar water electrolysis system is higher compared to a typical conventional solar electrolysis system wherein power electronics are involved between the solar cells and the electrolyser.

Configuring the photovoltaic array involves selecting the number of modules in series in a string (voltage) and the number of parallel strings (current). Configuring the electrolyser arrangement involves deciding the number of stacks to be used in the arrangement and the number of cells to be included in the stack.

In one embodiment of the invention, electrolyser arrangement is defined first based on the desired total power or hydrogen production requirement, paying attention to practical limitations on the DC busbar. The DC busbar may be limited to, for instance, <1500 V and approximately 4000 A. A next step is to match the photovoltaic array to the electrolysis requirements by selecting the number of modules in series in a string (voltage) and the number of parallel strings (current). The maximum irradiance line should have been set to be equal to the maximum real irradiance at a location. Therefore the performance curve of the photovoltaic array at maximum real irradiance at a respective location can be matched close to the maximum operating point of the electrolyser arrangement. Close herein being, for instance, in the range of +/- 2.5%. The maximum photovoltaic output at high irradiance should not normally exceed the electrolyser line, therefore protecting against over-power.

Figure 5 represents a method of matching of the P-V curve of the photovoltaic array with a characteristic curve of the electrolyser arrangement. P-V curves 510, 515, 520, 525, 530, 535 represent the P-V curves of the photovoltaic array at different solar radiation intensities. Fig. 5 also shows max power curve 550 representing a plot of maximum power points 555 of the P-V curves of the photovoltaic array. Maximum power curve 550 may also be referred to as MPP curve. The characteristic curve 560 of the electrolyser arrangement is also indicated. In one embodiment of the invention, the P-V curves 510, 515, 520, 525, 530, 535 represent the anticipated performance curve of the photovoltaic array at respective times ($N_{max}$). In one embodiment of the invention, electrolyser performance line 560 represents the anticipated performance curve of the electrolyser arrangement at a specific timeline ($T_n$ operation hours).

Figure 6 represents a method of matching the I-V curve 610 of the photovoltaic array with a characteristic curve 660 of the electrolyser arrangement. P-V curves 610, 615, 620, 625, 630, 635 represent the P-V curves of the photovoltaic array at different solar radiation intensities. Fig. 6 also indicates max power curve 650 representing a plot of maximum power points 655 of the P-V curves of the photovoltaic array. Max power curve 650 may also be referred to as MPP curve. The characteristic curve 660 of the electrolyser arrangement is also indicated. In an embodiment of the invention, anticipated performance curves 610, 615, 620, 625, 630, 635 represent the anticipated performance curve of the photovoltaic array at respective times on a specific timeline (Nmax). In an embodiment of the invention, the characteristic curve 660 represents the anticipated performance curve of the electrolyser arrangement at a specific timeline (Tn operation hours).

The present disclosure is not limited to the embodiments as described above and the appended claims. Many modifications are conceivable and features of respective embodiments may be combined.

The following examples of certain aspects of some embodiments are given to facilitate a better understanding of the present invention. In no way should these examples be read to limit, or define, the scope of the invention.

In one embodiment of the invention, the electrolyser arrangement is configured to match with a photovoltaic array power output. As described in the introduction of the present disclosure, performance curves of the photovoltaic array are calculated. Degradation rates of the photovoltaic modules are usually provided by the manufacturers as a percentage of the decrease in power output with the age of the module. For example, a photovoltaic vendor can quote degradation rates in the range of 15% to 25%, for instance about 20% loss of power output in 20 years. In the example of 20% over 20 year, a degradation rate of about 1% per year is taken, and applied as a reduction in the short circuit current, Isc(Ts). Table 1 below shows an example of short-circuit current reduction with the aging of the photovoltaic array.

Table 1: Example of short-circuit current reduction with ageing of the photovoltaic array.

| $I_{sc(Ts)}$ | 9.69 | start of life |
|---|---|---|
| | 9.59 | 1 yr |
| | 9.50 | 2 yr |

The anticipated performance curve of the photovoltaic array for a specific timeline can be calculated by decreasing the short circuit current values based on the derived annual degradation rate at specific voltages. Specific timeline considered can be the end of life of the photovoltaic array or midlife of the photovoltaic array. The specific timeline considered can be any timeline between the start of life and an end of life of the photovoltaic array.

Next step is to configure the electrolyser arrangement that needs to be directly connected with the photovoltaic arrangement. Configuration involves deciding the number of electrolyser stacks that need to be included and the number of electrolyser cells that need to be included in each stack so that an optimized configuration of the electrolysis system at an increased efficiency and a safe operation of the system can be achieved.

The process involves matching the electrolyser arrangement to the photovoltaic array power outputs by selecting the number of electrolyser stacks in an electrolyser arrangement and the number of electrolyser cells that need to be arranged in each of the electrolyser stack.

The process of matching may include the following steps:

a) Configure the electrolyser arrangement in such a way that maximum operating point 570 of the electrolyser arrangement may be matched closely with the maximum power point 555 of the anticipated performance curve of the photovoltaic array. The degree of closeness of the matching may be based on a design limitation of the electrolyser arrangement. Each configuration of the electrolyser arrangement may have their own performance curve and therefore, their own maximum operating point and it is preferred to have a configuration that has got a maximum operating point near to the maximum power point 570 of the photovoltaic array.

b) The anticipated performance curve of the photovoltaic array that has been considered in step (a) should be the one that is taken into account the maximum expected irradiance at a specific location where the water electrolysis system is planned to be operated. For instance,: Solar irradiation (on average throughout the year) in Amsterdam would be typically about 1000 W/m$^2$, or less, where in Australia it typically is about 1250 W/m$^2$

c) The electrolyser performance curve should be above the maximum photovoltaic output at high irradiance, therefore protecting against over power.

d) Maximum operating point 570 of the electrolyser arrangement mentioned in step (a) can be based on the predetermined performance curve of the electrolyser arrangement or it can be based on an anticipated performance curve of the electrolyser arrangement based on an assumed or predicted degradation rate of the electrolyser arrangement.

In another embodiment of the invention, configuration of the electrolyser arrangement is defined first based on the desired total power or hydrogen production requirement, paying attention to practical limitations on the DC busbar of <1500 V and approximately 4000 A. As described in the introduction, performance curves of the electrolyser arrangement are calculated. A first approximation of electrolyser arrangement aging can be defined by gradual increases in cell resistances; ionic and electrical ohmic resistance and activation overpotentials. This can be quantified by a steady (averaged) degradation rate, applied to the linear portion of the electrolyser polarization curve. For example, a degradation rate of 7 μV/hour can be assumed. Based on this degradation rate, an anticipated performance curve of the electrolyser arrangement for a specific timeline is calculated by increasing the voltage output at specific current values as shown in figure 7. Specific timeline can be the predicted end of life of the electrtolyser arrangement and it is expressed in terms of operation hours of the electrolyser arrangement. For example, approximate life of an electrolyser may be 16000 operation hours and the anticipated performance curve can be calculated by increasing the voltage values proportionately based on the degradation levels. Next step is to configure the photovoltaic array that need to be directly coupled with the electrolyser arrangement. Configuring step may involves deciding the number of photovoltaic panels in each string and the number of strings that need to be connected in parallel to make the photovoltaic array based on the matching of performance curves of the electrolyser arrangement and the photovoltaic array.

The process of matching may include the following steps:

a) Configure the photovoltaic array in such a way that maximum power point 555 of the anticipated performance curve of the photovoltaic array may be matched closely with the maximum operating point 570 of the electrolyser arrangement. The degree of closeness of the matching may be based on a design limitation of the photovoltaic array. Each configuration of the photovoltaic array may have their own performance curve and therefore, their own maximum power point and it is preferred a photovoltaic array configuration that has got a maximum power point 555 near to the maximum power point 570 of the electrolyser arrangement.

b) The anticipated performance curve of the photovoltaic array that has been considered in step (a) should be the one that has considered the maximum expected irradiance at a specific location where the water electrolysis system is planned to be operated. For instance, Solar irradiation (on average throughout the year) in Amsterdam would be typically about 1000 W/m2, or less, where in Australia it typically is about 1250 W/m2

c) Maximum operating point 570 of the electrolyser arrangement mentioned in step (a) can be based on the predetermined performance curve of the electrolyser arrangement or it can be based on an anticipated performance curve of the electrolyser arrangement based on an assumed or predicted degradation rate of the electrolyser arrangement

**Claims**

1. A method of configuring a water electrolysis system having at least two components, wherein the first component is directly connected to the second component, the method comprising the steps of:

a) providing a predetermined first performance curve of the first component;
b) providing a first degradation rate of the first component;
c) calculating an anticipated first performance curve of the first component for a specific timeline by modifying the predetermined first performance curve based on the first degradation rate;

d) providing a predetermined second performance curve of the second component; and

e) configuring the second component by matching the second performance curve with the anticipated first performance curve of the first component.

2. A method of configuring a water electrolysis system of claim 1, the method comprising the steps of:

a) providing a predetermined first performance curve of the first component and a predetermined second performance curve of the second component;

b) providing a first degradation rate of the first component and a second degradation rate of the second component;

c) calculating an anticipated first performance curve of the first component and an anticipated second performance curve of the second component for a specific timeline by modifying the predetermined first performance curve and the second performance curve based on the first degradation rate and the second degradation rate respectively; and

d) optimizing the configuration of the first component and the second component by matching the anticipated first performance curve with the anticipated second performance curve.

3. The method of configuring a water electrolysis system of claim 1 or 2, wherein the first component is a photovoltaic array and the second component is an electrolyser arrangement having at least one electrolyser stack.

4. The method of configuring a water electrolysis system of claim 1or 2, wherein the first component is an electrolyser arrangement having at least one electrolyser stack and the second component is a photovoltaic array.

5. The method of configuring a water electrolysis system of claim 1 or 2, wherein the specific timeline considered for calculating the anticipated first performance curve is any time between the start of life and end of life of the first component.

6. The method of configuring a water electrolysis system of claim 1 or 2, wherein the second performance curve is calculated for an end of life performance of the second component.

7. The method of configuring a water electrolysis system of claim 3, wherein the anticipated performance curve of the photovoltaic array is calculated by decreasing the current output values at a specific voltage in proportional to the degradation rate of the photovoltaic array with aging.

Fig.1

Fig.2

Fig.3

Fig.4

Fig.5

Fig.6

# Fig.7

# Fig.8

Europäisches
Patentamt

European
Patent Office

Office européen
des brevets

# EUROPEAN SEARCH REPORT

Application Number

EP 18 15 9458

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/033886 A1 (ECOLE POLYTECHNIQUE FED DE LAUSANNE EPFL [CH]) 22 February 2018 (2018-02-22) * page 7, lines 37-43; figure 14 * * page 18, line 19 - page 19, line 23; figures 13, 14 * * claims 1, 23, 25, 30 * | 1-7 | INV. C25B15/00 C25B1/04 |
| X | US 4 792 384 A (LEVY ALEXANDER H [US] ET AL) 20 December 1988 (1988-12-20) * column 1, lines 3-50; figure 2 * * column 5, lines 53-65; figure 2 * * claim 9 * | 1,2,5,6 | |
| X | US 2007/277870 A1 (WECHSLER MARK [US]) 6 December 2007 (2007-12-06) * paragraphs [0031] - [0033]; figure 1 * * paragraphs [0049] - [0053] * | 1-7 | |
| A | US 2002/033332 A1 (HANDA KIYOSHI [JP]) 21 March 2002 (2002-03-21) * the whole document * | 1-7 | |
| A | US 2016/281248 A1 (HAHN ALEXANDER [DE] ET AL) 29 September 2016 (2016-09-29) * paragraphs [0009] - [0019] * * paragraph [0033] * | 1-7 | TECHNICAL FIELDS SEARCHED (IPC) C25B |

The present search report has been drawn up for all claims

| Place of search | Date of completion of the search | Examiner |
|---|---|---|
| Munich | 29 June 2018 | Desbois, Valérie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 9458

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2018

| Patent document cited in search report | | | Publication date | Patent family member(s) | | | Publication date |
|---|---|---|---|---|---|---|---|
| WO 2018033886 | A1 | | 22-02-2018 | NONE | | | |
| US 4792384 | A | | 20-12-1988 | NONE | | | |
| US 2007277870 | A1 | | 06-12-2007 | NONE | | | |
| US 2002033332 | A1 | | 21-03-2002 | JP | 2002088493 | A | 27-03-2002 |
| | | | | US | 2002033332 | A1 | 21-03-2002 |
| US 2016281248 | A1 | | 29-09-2016 | CA | 2907464 | A1 | 25-09-2014 |
| | | | | DK | 2956572 | T3 | 19-06-2017 |
| | | | | EP | 2781624 | A1 | 24-09-2014 |
| | | | | EP | 2956572 | A1 | 23-12-2015 |
| | | | | ES | 2630111 | T3 | 18-08-2017 |
| | | | | JP | 6058205 | B2 | 11-01-2017 |
| | | | | JP | 2016518519 | A | 23-06-2016 |
| | | | | PT | 2956572 | T | 26-06-2017 |
| | | | | US | 2016281248 | A1 | 29-09-2016 |
| | | | | WO | 2014146885 | A1 | 25-09-2014 |

EPO FORM P0459

For more details about this annex : see Official Journal of the European Patent Office, No. 12/82

**EP 3 533 905 A1**

## REFERENCES CITED IN THE DESCRIPTION

### Patent documents cited in the description

- WO 07142693 A2
- US 2005189234 A
- CN 101565832 A